Europäisches Patentamt

European Patent Office

Office européen des brevets

(11) Publication number: **0 291 169 B1**

(12) **EUROPEAN PATENT SPECIFICATION**

(45) Date of publication of patent specification: **23.12.92**

(51) Int. Cl.5: **H04M 3/18**, H02H 3/087, H02H 3/06

(21) Application number: **88303286.4**

(22) Date of filing: **13.04.88**

(54) Protection arrangement for a telephone subscriber line interface circuit.

(30) Priority: **15.05.87 CA 537286**

(43) Date of publication of application:
**17.11.88 Bulletin 88/46**

(45) Publication of the grant of the patent:
**23.12.92 Bulletin 92/52**

(84) Designated Contracting States:
**AT DE FR GB NL SE**

(56) References cited:
**EP-A- 0 209 973
WO-A-86/02786
US-A- 4 514 595**

**PATENT ABSTRACTS OF JAPAN, vol. 9, no.
234 (E-344)[1957], 20th September 1985 &
JP-A-60 86 995**

(73) Proprietor: **NORTHERN TELECOM LIMITED
World Trade Center of Montreal, 380 St. An-
toine Street West, 8th Floor
Montreal, Ouebec H2Y 3Y4(CA)**

(72) Inventor: **Rosch, Reinhard, Werner
113 Hamilton Street Box 437
Richmond Ontario, KOA 2Z0(CA)**
Inventor: **Rosenbaum, Stanley Daniel
254 Grandview Road
Nepean Ontario, K2H 8A9(CA)**

(74) Representative: **Dupuy, Susan Mary et al
Northern Telecom Europe Limited Patents
and Licensing West Road
Harlow Essex CM20 2SH(GB)**

Rank Xerox (UK) Business Services

# Description

This invention relates to a protection arrangement for a telephone subscriber line interface circuit, referred to below as a SLIC.

It is a well known requirement to protect a SLIC, which typically contains sensitive electronic components, from excessive voltages and currents which may occur on the line to which the SLIC is connected, for example due to power line crosses and induced alternating currents from power lines. It is desirable for the protection arrangement to provide full protection to the SLIC under all common fault conditions, to accommodate various normal operating conditions in which, for example, significant but not excessive currents are induced on the line, and to reset itself automatically when a fault condition is removed. In addition, because a protection arrangement is needed for each line, important commercial requirements are that it be of low cost and of small size.

Many forms of protection arrangement have been proposed. For example, it has long been known to use so-called heat coil protectors, in which resistive heating coils are connected in series in the subscriber line wires and an excessive current produces heating to melt a fusible link and thereby protect the SLIC connected to the line. Such protectors have disadvantages in that they add to the resistance in series with the subscriber line, they can not reset themselves after a fault but instead must be manually replaced, and they are slow to respond to faults so that battery feed resistors, also connected in series with the subscriber line wires, may have to dissipate a substantial amount of power in the event of a fault.

In order to overcome some of these disadvantages, Jakab U.S. Patent No. 4,467,310 issued August 21, 1984 and entitled "Telephone Subscriber Line Battery Feed Resistor Arrangements" describes an arrangement in which a switching type PTC thermistor is connected in series with and forms part of a battery feed resistor with which it is in close thermal contact. Whilst such an arrangement is effective, it has a relatively high cost because it requires the use of closely matched thermistors in order to provide the necessary very close matching of resistances in the subscriber line wires.

Other known protection arrangements, involving for example the use of fusible solder bridges, or triggerable thyristors, involve other combinations of disadvantages such as those outlined above, the need for additional components, involving extra cost, or being subject to undesired triggering for example due to spurious and transient subscriber line voltages and currents.

To overcome many of these disadvantages, in Hung et al Canadian patent application No. 484,398 filed June 18, 1985 and entitled "Protection Arrangement for a Telephone Subscriber Line Interface Circuit" (equivalent to EP-A-0,209,973) there is described a protection arrangement in which the contacts of an isolation relay, already provided for the purpose of isolating the SLIC from the subscriber line, are positioned between the battery feed resistors and the remainder of the SLIC, the isolation relay being controlled via a sensing circuit to open these contacts in the event of an excessive common mode alternating current passing through the feed resistors, the sensing circuit thereafter responding to subscriber line voltage for continued control of the isolation relay. Such an arrangement, however, has certain disadvantages in that the thresholds for protection from excessive currents and excessive voltages are not sufficiently independent of one another or of the nature of the fault (e.g. whether a fault condition applies to both wires or only one wire of the subscriber line), there is a risk of chattering of the isolation relay under some fault conditions, and there is a risk of a latched condition arising following operation of the isolation relay for conventional purposes.

Another known protection arrangement is described in International Patent Application No. WO 86/02786 in the name of O. Ahuja, published on May 9, 1986 and entitled "Auto-Reset Circuit Breaker". This document describes a circuit breaker in which a solid state switch is triggered in response to an excessive voltage on or current flowing in a wire of, for example, an a.c. power line. The document also proposes how two such breakers may be combined for protecting equipment connected to a two-wire telecommuni- cations line. In addition to requiring primary (e.g. gas tube) and secondary (over-voltage) protectors, such an arrangement requires protective fuses and has the disadvantages mentioned above of using additional series resistances in the line and being subject to undesired triggering.

Accordingly, an object of this invention is to provide an improved protection arrangement for A SLIC.

According to this invention there is provided apparatus comprising a telephone subscriber line interface circuit, two feed resistors for coupling the line interface circuit to a two wire telephone subscriber line, and a protection arrangement comprising switching means, voltage sensing means responsive to voltage on the line, current sensing means coupled to, and responsive to current flowing through, the feed resistors, and control means for controlling the switching means, characterized in that:

the feed resistors are coupled between the switching means and the line interface circuit;

the control means is arranged for closing the switching means in normal operation and for opening the switching means in response to an excessive voltage on the line determined by the voltage sensing means and/or an excessive current through the feed resistors determined by the current sensing means;

the voltage sensing means and the current sensing means comprise means for producing a voltage dependent upon the voltage and current, respectively, on the line, and the control means comprises integrating means responsive to both said produced voltages and comparison means responsive to an output of the integrating means exceeding a predetermined threshold for opening the switching means.

The invention is based on the recognition that either an excessive voltage or an excessive current, or both, may occur on the line and present a need for protection. This protection is provided by the opening of the switching means, but this interrupts the current. As a result of the interruption, and in particular the disconnection of the relatively low terminating impedance of the line typically provided by d.c. feed resistors of the SLIC, a relatively high impedance is presented to the SLIC end of the line so that voltage on the line due to a fault may rise sufficiently that it becomes an excessive voltage even if it was not excessive before the current interruption. Sensing of the voltage on the line continues after opening of the switching means, the excessive voltage then maintaining an open state of the switching means so that chattering is avoided.

The voltage and current sending means comprise means for producing a voltage dependent upon the voltage and current, respectively, on the line, and the control means comprises integrating means responsive to both said produced voltages and comparison means responsive to an output of the integrating means exceeding a predetermined threshold for opening the switching means.
Conveniently the integrating means comprises a capacitor and the comparison means comprises a trigger circuit responsive to a voltage to which the capacitor is charged, and the control means comprises means for charging the capacitor when the voltage produced by the current sensing means exceeds a reference voltage. The voltage produced by the voltage sensing means is also applied to the capacitor for charging it.

Advantageously the switching means comprises contacts of an isolation relay which is typically already provided for the telephone subscriber line, and the control means is responsive to an isolation control signal for opening the switching means and discharging the capacitor. The discharging of the capacitor avoids a locked up state occurring when the isolation control signal is removed, in the event that excessive voltages are present on the line while it is not properly terminated due to the open relay contacts. Such excessive voltages may be acceptable if, for example, they are due to induction from a power line and result in only a small, not excessive, line current when the relay contacts are closed and the line is properly terminated.

Similarly, the control means is preferably responsive to a ringing control signal for discharging the capacitor, to prevent high ringing voltages on the line from causing the switching means to be opened.

In a preferred embodiment of the invention, the voltage sensing means is responsive to only one polarity of voltage on the line and the current sensing means is responsive, when the switching means is closed, to only one polarity of current on the line, said one polarity of current corresponding to a voltage on the line of polarity opposite to said one polarity of voltage. This provides for simplicity and low cost in the design of the voltage and current sensing means, but ensures a prompt (within half a cycle of an a.c. waveform) opening of the switching means in the event that a major fault on the line causes both an excessive voltage and an excessive current.

The invention also extends to a method of protecting a telephone subscriber line interface circuit (SLIC), coupled via two feed resistors and switching means to a telephone subscriber line, from excessive voltage and/or current on the line, comprising sensing voltage on the line on the line side of the switching means, sensing current through the feed resistors, and opening the switching means in response to an excessive sensed current or voltage, characterised in that the feed resistors are coupled between the switching means and the SLIC, and including the steps of producing a voltage dependent upon the sensed voltage, producing a voltage dependent upon the sensed current, applying said produced voltages to integrating means and applying the output of the integrating means to comparison means which serve to open the switching means in response to the output of the integrating means exceeding a predetermined threshold.

The invention will be further understood from the following description with reference to the accompanying drawings, in which:

Fig. 1 is a general functional block diagram of a SLIC and protection arrangement in accordance with an embodiment of the invention; and

Fig. 2 is a circuit diagram schematically illustrating the arrangement of Fig. 1 in greater detail.

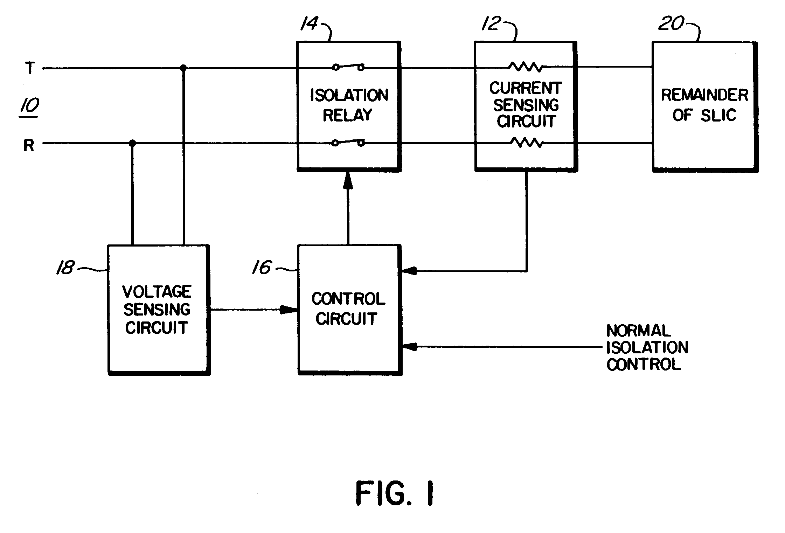

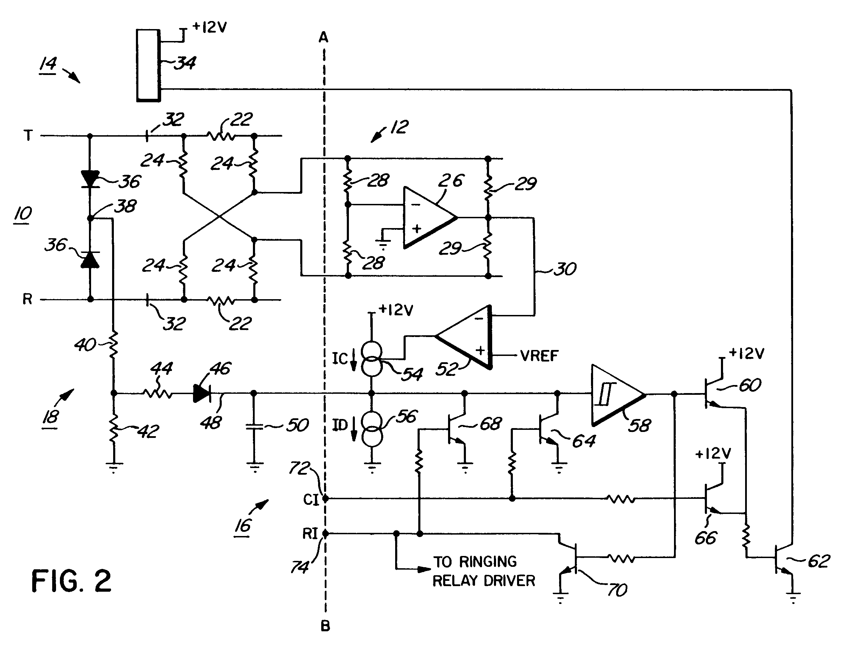

Referring to Fig. 1, a SLIC and protection arrangement is illustrated coupled to a 2-wire telephone subscriber line 10 comprising tip and ring wires T and R respectively. A current sensing circuit 12 is coupled to two closely matched battery feed resistors of the SLIC, which are coupled in series with the tip and ring wires via the contacts of an isolation relay 14. The isolation relay is conventionally provided for cut-over purposes, and to isolate the SLIC from the line 10 for example for testing purposes, in each case being controlled by software of a telephone switch to which the line 10 is connected via the SLIC. In addition, in accordance with this invention the relay 14 is also controlled by a control circuit 16 in dependence upon line currents, sensed by the current sensing circuit 12, on the SLIC side of the relay contacts, and in dependence upon line voltages, sensed by a voltage sensing circuit 18, on the line side of the relay contacts. The remaining parts of the SLIC, which can be of known form and with which the present invention is not concerned, are represented in Fig. 1 by a block 20.

Referring to Fig. 2, in which the line 10 and the components 12 to 18 are generally indicated by the same references as in Fig. 1, the protection arrangement and its operation will now be described in greater detail.

The current sensing circuit 12 in Fig. 2 comprises cross-connected potential dividers formed by resistors 24 coupled to the closely matched feed resistors 22, and a current summing d.c. amplifier, comprising an operational amplifier 26, input resistors 28, and feedback resistors 29, having an output line 30 on which there is produced a voltage representative of current through the feed resistors 22. The arrangement of the resistors 24 is known for example from Rosenbaum et al. United States Patent No. 4,514,595 issued April 30, 1985 and entitled "Active Impedance Line Feed Circuit".

The feed resistors 22 are coupled to the tip and ring wires T and R of the line 10 via the contacts 32 of the isolation relay 14, which also comprises a relay coil 34.

The voltage sensing circuit 18 comprises two diodes 36, each connected between a respective one of the tip and ring wires T and R and a junction point 38 and poled to be normally reverse biassed by the d.c. which is conventionally applied to the telephone subscriber line 10, a potential divider comprising resistors 40 and 42 connected between the junction point 38 and ground, and an optional resistor 44 and a diode 46 connected in series between the tapping point of the potential divider and an output line 48 of the voltage sensing circuit.

The control circuit 16 comprises a capacitor 50, a voltage comparator 52, a controlled current source 54, a current sink 56, a Schmitt trigger circuit 58, an NPN buffer transistor 60, and NPN transistors 62, 64, 66, 68, and 70 each including a current-limiting resistor (not referenced for the sake of clarity) in series with its base. In addition, the control circuit 16 includes input terminals 72 and 74 for control signals CI and RI respectively which are discussed further below. Components to the right of a broken line A-B shown in Fig. 2 may be conveniently provided with other parts of the SLIC, not shown in Fig. 2, in one or more integrated circuit devices.

The capacitor 50 is connected between the line 48 and ground, whereby it can be charged via the optional resistor 44 (which provides an increased charging time constant if desired) and the diode 46 from the potential divider of the voltage sensing circuit 18 during a positive half-cycle of an a.c. potential (or in the presence of a positive d.c. potential) on either or both wires of the subscriber line 10. The comparator 52 has an inverting input connected to the output line 30 of the current sensing circuit 12, a non-inverting input connected to a reference voltage VREF, and an output which controls the current source 54. During a negative half cycle of an alternating current passing through either or both of the feed resistors 22, if the peak current is sufficiently high that an overcurrent threshold established by the reference voltage VREF is crossed by the voltage on the output line 30 of the current sensing circuit, then the comparator 52 turns on the current source 54 to supply a constant current IC to the line 48 and hence to charge the capacitor 50.

The current sink 56 is connected between the line 48 and ground and passes a constant current ID to provide a slow discharge path for the capacitor 50. The line 48 is also connected to the input of the Schmitt trigger circuit 58, which is triggered in the event that the capacitor 50 is charged to a predetermined trigger voltage, thereby energizing the isolation relay coil 34, to open the contacts 32, via the buffer transistor 60 and the transistor 62 which acts as an isolation relay driver. When the capacitor 50 has discharged to a lower threshold voltage, via the components 58, 60, and 62 the isolation relay coil 34 is de-energized and the contacts 32 are closed.

For software control of the isolation relay, the control signal CI can be applied to the terminal 72, rendering the transistors 64 and 66 coupled to this terminal conductive. The transistor 66 turns on the isolation relay driver transistor 62 to energize the isolation relay coil 34 as described above, and the transistor 64 discharges the capacitor 50. The discharging of the capacitor 50 inhibits operation of the protection arrangement while the control signal CI is present, and hence in the presence of high induced voltages which may occur on the line 10 in the absence of a proper line termination via the SLIC. This inhibition avoids a latched condition, in which the relay coil 34 would remain energized, when the control signal CI is terminated.

In a similar manner, the transistor 68 is turned on, to discharge the capacitor 50, by the control signal RI, which is applied to the terminal 74 to energize a ringing relay driver (not shown) to apply ringing voltages to the line 10. The ringing voltages could otherwise themselves cause the capacitor 50 to be charged sufficiently to trigger the Schmitt trigger circuit 58. In the event that the protection arrangement has already been triggered, then the transistor 70 is turned on to clamp the terminal 74 to ground, so that the ringing relay can not be energized in the presence of, and hence ringing equipment can not be damaged by, excessive voltages on the line 10.

From the above description, it should be appreciated that an excessive voltage and/or current on the line 10 results in charging of the capacitor 50, triggering of the circuit 58, and consequent opening of the contacts 32 thereby to protect the SLIC from the excessive voltage or current. For example, in the presence of an excessive alternating current on the line, during a negative half cycle the current source 54 is turned on, the capacitor 50 is charged, and the circuit 58 triggered to open the contacts 32 thereby interrupting the current. The opening of the contacts 32 removes the relatively low impedance termination of the line by the SLIC (the voltage sensing circuit potential divider has a high impedance), so that the line voltage rises and the charged state of the capacitor 50 is maintained during positive half cycles via the voltage sensing circuit. The threshold levels provided by the reference voltage VREF and the Schmitt trigger circuit 58, the division ratio of the potential divider in the voltage sensing circuit, and the rates of charging and discharging the capacitor 50 via the components 46, 54, and 56 can all be independently determined to provide for desired operating characteristics. In particular, the capacitor 50 may be conveniently charged with a time constant of about 3ms and discharged with a time constant of about 200ms to avoid chattering of the isolation relay at the frequency of the excessive current or voltage.

In the presence of an excessive alternating voltage, without an excessive current, on the line 10 the capacitor 50 is charged via the diode 46 during positive half cycles, whereby the isolation relay contacts 32 are opened as described above. In the event of a major fault condition, simultaneously causing both excessive alternating voltage and current on the line 10, the capacitor 50 will be charged, and the contacts 32 opened, via the diode 46 or the current source 54 within one half cycle, whereby rapid protection is achieved.

Although a particular embodiment of the invention has been described above, it should be appreciated that many changes may be made therein. For example, different forms of current and voltage sensing and trigger circuits may be used, and the capacitor 50 may be replaced by a different form of integrator or time delay circuit. In addition, the clamping transistors 64 and 68 may be replaced by constant current sinks, and if desired a zero crossing predictor could be provided, in the manner described in the Hung et al. application referred to above, in order to avoid any possibility of arcing at the relay contacts. Furthermore, although the use of the already-provided isolation relay is preferred, if desired a separate relay may instead be provided for the protection purposes as described above.

## Claims

1. Apparatus comprising a telephone subscriber line interface circuit, two feed resistors for coupling the line interface circuit to a two wire telephone subscriber line, and a protection arrangement comprising switching means, voltage sensing means responsive to voltage on the line, current sensing means coupled to, and responsive to current flowing through, the feed resistors, and control means for controlling the switching means, characterized in that:

   the feed resistors (22) are coupled between the switching means (14) and the line interface circuit (20);

   the control means (16) is arranged for closing the switching means in normal operation and for opening the switching means in response to an excessive voltage on the line (10) determined by the voltage sensing means (18) and/or an excessive current through the feed resistors determined by the current sensing means (12); the voltage sensing means (18) and the current sensing means (12) comprise means for producing a voltage dependent upon the voltage and current, respectively, on the line (10), and the control means (16) comprises integrating means (50) responsive to both said produced voltages and comparison means (58) responsive to an output of the integrating means exceeding a predetermined threshold for opening the switching means (14).

2. Apparatus as claimed in claim 1, wherein the integrating means comprises a capacitor (50) and the comparison means comprises a trigger circuit (58) responsive to a voltage to which the capacitor is charged.

3. Apparatus as claimed in claim 2 wherein the control means (16) comprises means (52,54) for charging the capacitor (50) when the voltage produced by the current sensing means (12) exceeds a reference voltage (VREF).

4. Apparatus as claimed in claim 3 wherein the voltage produced by the voltage sensing means (18) is applied to the capacitor (50) whereby to charge it.

5. Apparatus as claimed in claim 2, 3 or 4 wherein the control means (16) is responsive to a ringing control signal (RI) for discharging the capacitor (50).

6. Apparatus as claimed in any of claims 1 to 5 wherein the switching means (14) comprises contacts (32) of an isolation relay (14) for the telephone subscriber line (10), and the control means (16) is responsive to an isolation control signal (CI) for opening the switching means and discharging the capacitor (50).

7. Apparatus as claimed in any of claims 1 to 6 wherein the voltage sensing means (18) is responsive to only one polarity of voltage on the line (10) and the current sensing means (12) is responsive to only one polarity of current through the feed resistors (22), said one polarity of current corresponding to a voltage on the line of polarity opposite to said one polarity of voltage.

8. A method of protecting a telephone subscriber line interface circuit (SLIC), coupled via two feed resistors and switching means to a telephone subscriber line, from excessive voltage and/or current on the line, comprising sensing voltage on the line (10) on the line side of the switching means, sensing current through the feed resistors, and opening the switching means in response to an excessive sensed current or voltage, characterised in that the feed resistors (22) are coupled between the switching means (14) and the SLIC (20), and including the steps of producing a voltage dependent upon the sensed voltage, producing a voltage dependent upon the sensed current, applying said produced voltages to integrating means (50) and applying the output of the integrating means to comparison means (58) which serve to open the switching means (14) in response to the output of the integrating means exceeding a predetermined threshold.

9. A method as claimed in claim 8 wherein current of only a first polarity and voltage of only a second polarity, opposite to the first polarity, are sensed.

**Patentansprüche**

1. Vorrichtung mit einer Fernsprechteilnehmerleitungs-Schnittstellenschaltung, mit zwei Speisewiderständen zum Anschalten der Leitungs-Schnittstellenschaltung an eine Zweidraht-Fernsprechteilnehmerleitung, und mit einer Schutzanordnung, die eine Schaltereinrichtung, eine auf die Spannung an der Leitung ansprechende Spannungsmeßeinrichtung, eine auf den durch die Speisewiderstände fließenden Strom ansprechende Strommeßeinrichtung und eine Steuereinrichtung zum Steuern der Schaltereinrichtung umfaßt,
dadurch gekennzeichnet, daß
die Speisewiderstände (22) zwischen der Schaltereinrichtung (14) und der Leitungs-Schnittstellenschaltung (20) eingeschaltet sind,
die Steuereinrichtung (16) so ausgebildet ist, daß sie die Schaltereinrichtung im Normalbetrieb schließt und die Schaltereinrichtung in Abhängigkeit von einer von der Spannungsmeßeinrichtung (18) festgestellten Überspannung an der Leitung (10) und/oder in Abhängigkeit von einem von der Strommeßeinrichtung (12) festgestellten Überstrom durch die Speisewiderstände öffnet, wobei die Spannungsmeßeinrichtung (18) und die Strommeßeinrichtung (12) Einrichtungen zur Erzeugung einer von der Spannung bzw. dem dem Strom auf der Leitung (10) abhängigen Spannung umfassen, und wobei die Steuereinrichtung (16) auf die beiden erzeugten Spannungen ansprechende Integrationseinrichtungen (50) und eine Vergleichereinrichtung (58) umfaßt, die auf einen einen vorgegebenen Schwellenwert überschreitenden Ausgang von den Integrationseinrichtungen anspricht, um die Schaltereinrichtung (14) zu öffnen.

2. Vorrichtung nach Anspruch 1, bei der die Integrationseinrichtungen einen Kondensator (50) umfassen und bei der die Vergleichereinrichtung eine Triggerschaltung (58) umfaßt, die auf eine Spannung anspricht, auf die der Kondensator aufgeladen wurde.

3. Vorrichtung nach Anspruch 2, bei der die Steuereinrichtung (16) Einrichtungen (52,54) zum Laden des Kondensators (50) umfaßt, wenn die von der Strom-Meßeinrichtung (12) erzeugte Spannung eine Bezugsspannung (VREF) übersteigt.

4. Vorrichtung nach Anspruch 3, bei der die von der Spannungsmeßeinrichtung (18) erzeugte Spannung dem Kondensator (50) zu seiner Ladung zugeführt wird.

5. Vorrichtung nach Anspruch 2, 3 oder 4, bei der die Steuereinrichtung (16) auf ein Rufsteuersignal (RI) anspricht, um den Kondensator (50) zu entladen.

6. Vorrichtung nach einem der Ansprüche 1 bis 5, bei der die Schaltereinrichtung (14) Kontakte (32) eines Trennrelais (14) für die Fernsprechteilnehmerleitung (10) umfaßt, und bei der die Steuereinrichtung (16) auf ein Trennsteuersignal (CI) anspricht, um die Schaltereinrichtung zu öffnen und den Kondensator (50) zu entladen.

7. Vorrichtung nach einem der Ansprüche 1 bis 6, bei der die Spannungsmeßeinrichtung (18) lediglich auf eine Polarität der Spannung an der Leitung (10) anspricht und bei der die Strom-Meßeinrichtung (12) lediglich auf eine Polarität des Stromes durch die Speisewiderstände (22) anspricht, wobei die eine Polarität des Stromes einer Spannung auf der Leitung mit einer Polarität entspricht, die zu der einen Polarität der Spannung entgegengesetzt ist.

8. Verfahren zum Schutz einer Fernsprechteilnehmerleitungs-Schnittstellenschaltung (SLIC), die über zwei Speisewiderstände und eine Schaltereinrichtung mit einer Fernsprechteilnehmerleitung verbunden ist, gegen Überspannungen und/oder Überstrom auf der Leitung, mit den Schritten der Messung der Spannung auf der Leitung (10) auf der Leitungsseite der Schaltereinrichtung, der Messung des Stromes durch die Speisewiderstände und des Öffnens der Schaltereinrichtung in Abhängigkeit von einem gemessenen Überstrom oder einer Überspannung, dadurch gekennzeichnet, daß die Speisewiderstände (22) zwischen der Schaltereinrichtung (14) und der SLIC (20) eingeschaltet sind, und daß das Verfahren die Schritte der Erzeugung einer von der gemessenen Spannung abhängigen Spannung, der Erzeugung einer von dem gemessenen Strom abhängigen Spannung, die Zuführung der erzeugten Spannung an Integrationseinrichtungen (50) und die Zuführung des Ausganges der Integrationseinrichtungen an eine Vergleichereinrichtung (58) umfaßt, die dazu dient, die Schaltereinrichtung (18) in Abhängigkeit davon zu öffnen, daß der Ausgang der Integrationseinrichtungen einen vorgegebenen Schwellenwert übersteigt.

9. Verfahren nach Anspruch 8, bei dem ein Strom mit lediglich einer ersten Polarität und eine Spannung mit lediglich einer zweiten Polarität, die entgegengesetzt zur ersten Polarität ist, gemessen werden.

**Revendications**

1. Appareil comprenant un circuit d'interface de ligne d'abonné téléphonique, deux résistances d'alimentation destinées à coupler le circuit d'interface de ligne à une ligne d'abonné téléphonique à deux fils, et un ensemble de protection comprenant un dispositif d'interruption, un dispositif détecteur de tension sensible à une tension de la ligne, un dispositif détecteur de courant couplé aux résistances d'alimentation et sensible au courant circulant dans ces résistances, et un dispositif de commande du dispositif d'interruption, caractérisé en ce que

les résistances d'alimentation (22) sont couplées entre le dispositif d'interruption (14) et le circuit (20) d'interface de ligne,

le dispositif de commande (16) est destiné à fermer le dispositif d'interruption pendant le fonctionnement normal et à ouvrir le dispositif d'interruption en présence d'une tension excessive dans la ligne (10) déterminée par le dispositif détecteur de tension (18) et/ou d'un courant excessif dans les résistances d'alimentation, déterminé par le dispositif détecteur de courant (12), le dispositif détecteur de tension (18) et le dispositif détecteur de courant (12) comportent un dispositif destiné à créer une tension qui dépend de la tension et du courant, respectivement, dans la ligne (10), et le dispositif de commande (16) comporte un dispositif d'intégration (50) sensible aux deux tensions produites, et un dispositif de comparaison (58) sensible au dépassement d'un seuil prédéterminé par le signal de sortie du dispositif d'intégration et destiné à ouvrir le dispositif d'interruption (14).

2. Appareil selon la revendication 1, dans lequel le dispositif d'intégration comporte un condensateur (50) et le dispositif de comparaison comporte un circuit de déclenchement (58) commandé par une tension à laquelle est chargé le condensateur.

3. Appareil selon la revendication 2, dans lequel le dispositif de commande (16) comporte un dispositif (52, 54) destiné à charger le condensateur (50) lorsque la tension produite par le dispositif détecteur de courant (12) dépasse une tension de référence (VREF).

4. Appareil selon la revendication 3, dans lequel la tension produite par le dispositif capteur de tension (18) est appliquée au condensateur (50) afin que celui-ci soit chargé.

5. Appareil selon la revendication 2, 3 ou 4, dans lequel le dispositif de commande (16) est commandé par un signal de commande de sonnerie (RI) destiné à décharger le condensateur (50).

6. Appareil selon l'une quelconque des revendications 1 à 5, dans lequel le dispositif d'interruption (14) comporte des contacts (32) d'un relais d'isolement (14) de la ligne d'abonné téléphonique (10), et le dispositif de commande (16) est commandé par un signal (CI) de commande d'isolement et il ouvre le dispositif d'interruption et décharge le condensateur (50).

7. Appareil selon l'une quelconque des revendications 1 à 6, dans lequel le dispositif détecteur de tension (18) est sensible à une seule polarité de la tension de la ligne (10) et le dispositif détecteur de courant (12) est sensible à une seule polarité du courant dans les résistances d'alimentation (22), la polarité du courant correspondant à une tension de la ligne ayant une polarité opposée à la seule polarité de la tension.

8. Procédé de protection d'un circuit d'interface de ligne d'abonné téléphonique (SLIC), couplé par deux résistances d'alimentation et un dispositif d'interruption à une ligne d'abonné téléphonique, contre une tension excessive et/ou un courant excessif dans la ligne, comprenant la détection de la tension dans la ligne (10) du côté du dispositif d'interruption tourné vers la ligne, la détection du courant circulant dans les résistances d'alimentation, et l'ouverture du dispositif d'interruption en présence d'une tension ou d'un courant excessif qui a été détecté, caractérisé en ce que les résistances d'alimentation (22) sont couplées entre le dispositif d'interruption (14) et le circuit SLIC (20), et le procédé comprend la production d'une tension qui dépend de la tension détectée, la production d'une tension qui dépend du courant détecté, l'application des tensions produites à un dispositif intégrateur (50) et l'application du signal de sortie du dispositif intégrateur à un dispositif de comparaison (58) qui est utilisé pour l'ouverture du dispositif d'interruption (14) en fonction du signal de sortie du dispositif intégrateur lorsque ce signal dépasse un seuil prédéterminé.

9. Procédé selon la revendication 8, dans lequel un courant d'une première polarité seulement et une tension d'une seconde polarité seulement, opposée à la première polarité, sont détectés.

FIG. I

EP 0 291 169 B1

FIG. 2

EP 0 291 169 B1